# EUROPÄISCHE PATENTSCHRIFT

(11) **EP 3 900 172 B1**
(45) Veröffentlichungstag und Bekanntmachung des Hinweises auf die Patenterteilung: **28.02.2024**
(21) Anmeldenummer: 19816680.3
(22) Anmeldetag: 06.12.2019
(51) Int. Cl.: H02M 3/335, H02M 1/34, H02M 1/00

(54) **GLEICHSPANNUNGSWANDLER ZUR BIDIREKTIONALEN ELEKTRISCHEN LEISTUNGSÜBERTRAGUNG VON EINER PRIMÄRSEITE ZU EINER SEKUNDÄRSEITE DES GLEICHSPANNUNGSWANDLERS ODER UMGEKEHRT**
DIRECT-CURRENT VOLTAGE CONVERTER FOR BIDIRECTIONAL ELECTRICAL POWER TRANSMISSION FROM A PRIMARY SIDE TO A SECONDARY SIDE OF THE DIRECT-CURRENT VOLTAGE CONVERTER OR VICE VERSA
CONVERTISSEUR DE TENSION CONTINUE POUR TRANSMISSION DE PUISSANCE ÉLECTRIQUE BIDIRECTIONNELLE D'UN CÔTÉ PRIMAIRE À UN CÔTÉ SECONDAIRE DU CONVERTISSEUR DE TENSION CONTINUE OU VICE VERSA

(30) Priorität: 21.12.2018 DE 102018222714; 19.06.2019 DE 102019208942
(43) Veröffentlichungstag der Anmeldung: 27.10.2021
(73) Patentinhaber: Robert Bosch GmbH, 70442 Stuttgart (DE)
(72) Erfinder: PLUM, Thomas, 50937 Koeln (DE)
(86) Internationale Anmeldenummer: PCT/EP2019/084011
(87) Internationale Veröffentlichungsnummer: WO 2020/126554

(56) Entgegenhaltungen:
- US-A1- 2004 062 061
- US-A1- 2017 257 033
- US-A1- 2019 222 131
- US-B1- 10 063 159

## Beschreibung

Die Erfindung betrifft einen Gleichspannungswandler zur bidirektionalen elektrischen Leistungsübertragung von einer Primärseite zu einer Sekundärseite des Gleichspannungswandlers oder umgekehrtmit asymmetrischer Topologie, der einen Strom einer sekundärseitigen Sekundärspule mittels eines einzigen gesteuerten Schalters schaltet.

### Stand der Technik

Zum Transfer elektrischer Leistung zwischen zwei Gleichspannungsniveaus werden so genannte DC/DC Wandler bzw. Gleichspannungswandler eingesetzt. Es existiert eine Vielzahl möglicher Topologien für solche Wandler. Eine davon ist die so genannte Active-Clamped Flyback Topologie, die auch als aktiv geklemmter Sperrwandler bezeichnet wird und sich durch eine geringe Anzahl elektronischer Komponenten auszeichnet. Dabei ist der Gleichrichter auf der Sekundärseite als gesteuerter Schalter implementiert. Entsprechende Gleichspannungswandler sind aus den Druckschriften US 2017/257033 A1, US 2004/062061 A1, US 2019/222131 A1 und US 10 063 159 B1 bekannt.

In der DE 195 07 084 A1 wird ein als Schaltregler ausgebildeter Sperrwandler vorgeschlagen, dessen Gleichrichter im Ausgangskreis von einem elektronischen Schalter überbrückbar ist. Dieser elektronische Schalter wird synchron zum Schaltregler-Stellglied leitend gesteuert. Der Schaltregler der Erfindung besitzt einen guten Wirkungsgrad und gute Mitlaufeigenschaften. Der elektronische Schalter liegt parallel über dem Gleichrichter der Sekundärseite. Seine Steuerung erfolgt erfindungsgemäß synchron und im Gegentakt zur Steuerung des Schaltregler-Stellgliedes, d. h. wenn das Schaltregler-Stellglied über den Pulsbreitenmodulator PBM gesperrt wird, wird der Feldeffekttransistor leitend gesteuert und überbrückt somit den Gleichrichter niederohmig.

Mit solch einer Schaltungstopologie und dem entsprechenden bekannten Modulationsverfahren, d. h. Ansteuermuster oder auch Spannungs-Zeit-Verlauf der Leitungszustände der drei gesteuerten Schalttransistoren, erfolgt ein elektrischer Leistungsfluss von der Primärseite zur Sekundärseite dieser Schaltung.

Für einen bidirektionalen Betrieb wird im Stand der Technik diese aktiv geklemmte Sperrwandlertopologie symmetrisch erweitert. (Gang Chen, Yim-Shu Lee, S. Y. R. Hui, Dehong Xu and Yousheng Wang, "Actively clamped bidirectional flyback converter," in IEEE Transactions on Industrial Electronics, vol. 47, no. 4, pp. 770-779, Aug 2000.) Damit ist zusätzlich, allein schon aus Symmetriegründen, auch ein Betrieb von der Sekundärseite zur Primärseite möglich.

Solche Gleichspannungswandler werden z. B. als Bordnetzwandler für ein Elektro-Fahrzeug eingesetzt, bei dem im Regelfall eine elektrische Leistung von der deutlich höheren Spannung der Primärseite auf die Sekundärseite abgeleitet wird, so z.B. von 400V auf 12V. Dabei ergeben sich Szenarien, in denen ein umgekehrter Leistungsfluss mit möglichst wenig schaltungstechnischem Aufwand bereitgestellt werden muss.

Die Aufgabe der Erfindung besteht darin, einen Gleichspannungswandler mit der Schaltungstopologie entsprechend einem aktiv geklemmten Sperrwandler und einem gesteuertem Gleichrichter im Sekundärkreis bereitzustellen, der eine elektrische Leistungsübertragung von der Sekundärseite zur Primärseite ermöglicht.

### Offenbarung der Erfindung

Erfindungsgemäß wird ein Gleichspannungswandler, ein Verfahren zur elektrischen Leistungsübertragung, ein Computerprogrammprodukt, ein computerlesbares Speichermedium und ein Antriebssystem gemäß den Merkmalen der unabhängigen Ansprüche angegeben, die zumindest zum Teil die genannten Wirkungen aufweisen. Vorteilhafte Ausgestaltungen sind Gegenstand der abhängigen Ansprüche sowie der nachfolgenden Beschreibung.

Es wird ein Gleichspannungswandler zur elektrischen Leistungsübertragung von einer Sekundärseite zu einer Primärseite des Gleichspannungswandlers bereitgestellt. Der Gleichspannungswandler umfasst einen galvanisch trennenden Transformator mit einer primärseitigen Primärspule und einer sekundärseitigen Sekundärspule. Die Primärspule ist einerseits mit einem ersten Primärspannungsanschluss verbunden und andererseits in Reihe mit einem ersten Schalter mit einem zweiten Primärspannungsanschluss verbunden. Parallel zur Primärspule ist ein Kondensator in Reihe mit einem zweiten Schalter verbunden. Die Sekundärspule ist einerseits mit einem ersten Sekundärspannungsanschluss und andererseits in Reihe mit einem dritten Schalter mit einem zweiten Sekundärspannungsanschluss verbunden. Weiter umfasst der Gleichspannungswandler eine Regeleinrichtung die dazu eingerichtet ist, den ersten, zweiten und dritten Schalter wiederholend, insbesondere gemäß eines Ansteuerungsmusters, zu öffnen und zu schliessen, oder entsprechend auszuschalten und einzuschalten. Dabei ist stets der erste Schalter ausgeschaltet, wenn der zweite Schalter eingeschaltet ist und umgekehrt zur Generierung einer Wechselspannung in der Primärspule. Der dritte Schalter wird in Abhängigkeit der Schalterstellung des ersten Schalters ausgeschaltet und eingeschaltet. Die Regeleinrichtung ist dazu eingerichtet, einen Zeitpunkt des Einschaltens des dritten Schalters auf einen Zeitpunkt zu legen bevor der erste Schalter ausgeschaltet und der zweite Schalter eingeschaltet wird, um einen Leistungsfluss von der Sekundärseite zu der Primärseite zu ermöglichen.

Das Ausschalten des ersten und das Einschalten des zweiten Schalters, und umgekehrt, erfolgt stets um eine Totzeit versetzt, damit sichergestellt wird, dass der erste und der zweite Schalter niemals gleichzeitig leitend sind. Das Ausschalten dieses dritten Schalters erfolgt vorteilhafterweise kurz vor dem Nulldurchgang des Stromes durch diesen Schalter. Je nach Arbeitspunkt ergeben sich daher unterschiedliche Zeitabstände zwischen dem Ausschalten des zweiten Schalters und dem Ausschalten des dritten Schalters.

Der zweite und dritte Schalter werden insbesondere zeitgleich ausgeschaltet. Der zweite und dritte Schalter werden zu geringfügig unterschiedlichen Zeitpunkten eingeschaltet. Daher sind der zweite und dritte Schalter nahezu zu den gleichen Zeiten eingeschaltet und ausgeschaltet. Die Zeitdauer, die der dritte Schalter länger eingeschaltet ist als der zweite Schalter beträgt insbesondere 1-20% der Dauer, die der zweite Schalter eingeschaltet ist. Auf diese Weise kann der dritte Schalter wie beschrieben in seinem Stromnulldurchgang ausgeschaltet werden. Dadurch werden minimale Leit- und Schaltverluste für diesen Schalter erreicht. Je länger der dritte Schalter im Vergleich zum zweiten Schalter eingeschaltet ist, desto mehr Leistung wird von der Sekundärseite zur Primärseite übertragen.

Vorteilhaft wird eine Schaltungstopologie mit einer Regeleinrichtung bereitgestellt, die eine elektrische Leistungsübertragung von der Sekundärseite zur Primärseite des Gleichspannungswandlers ermöglicht.

In einer anderen Ausgestaltung der Erfindung ist die Regeleinrichtung dazu eingerichtet, den Zeitpunkt des Einschaltens des dritten Schalters auf einen Zeitpunkt zu legen, nachdem der erste Schalter ausgeschaltet und der zweite Schalter eingeschaltet wird, um einen Leistungsfluss seitens der Primärseite zu der Sekundärseite zu ermöglichen.

Der zweite und dritte Schalter werden insbesondere zeitgleich ausgeschaltet. Der zweite und dritte Schalter werden zu geringfügig unterschiedlichen Zeitpunkten eingeschaltet. Daher sind der zweite und dritte Schalter nahezu zu den gleichen Zeiten eingeschaltet und ausgeschaltet. Die Zeitdauer, die der dritte Schalter kürzer eingeschaltet ist als der zweite Schalter beträgt insbesondere 1-20% der Dauer, die der zweite Schalter eingeschaltet ist. Je kürzer der dritte Schalter im Vergleich zum zweiten Schalter eingeschaltet ist, desto mehr leistung wird von der Primärseite zur Sekundärseite übertragen.

Vorteilhaft wird eine Schaltungstopologie mit einer Regeleinrichtung bereitgestellt, die eine elektrische Leistungsübertragung auch von der Primärseite zur Sekundärseite des Gleichspannungswandlers ermöglicht.

In einer anderen Ausgestaltung der Erfindung ist die Regeleinrichtung dazu eingerichtet, in Abhängigkeit einer vorgebbaren Leistungsübertragungsrichtung den Zeitpunkt des Einschaltens des dritten Schalter auf einen Zeitpunkt zu legen, bevor oder nachdem der erste Schalter ausgeschaltet und der zweite Schalter eingeschaltet wird um einen Leistungsfluss entsprechend der vorgegebenen Leisungsübertragungsrichtung einzustellen.

Es wird ein Gleichspannungswandler bereitgestellt, der in Abhängigkeit einer Vorgabe die Leistungsübertragungsrichtung durch den Gleichspannungswandler anpasst, indem der Zeitpunkt des Einschaltens des dritten Schalters in Abhängigkeit der Schalterstellung des ersten Schalters auf einen Zeitpunkt gelegt wird, der vor oder nach dem Zeitpunkt der Ausschaltens des ersten Schalters gelegt wird. Vorteilhaft wird ein Gleichspannnugswandler bereitgestellt, dessen Leistungsübertragungsrichtung vorgebbar ist.

Erfindungsgemäß ist die Regeleinrichtung dazu eingerichtet, in Abhängigkeit einer vorgebbaren Leistung den Abstand des Zeitpunkts des Einschaltens des dritten Schalters vor oder nach dem Zeitpunkt des Ausschaltens des ersten Schalters einzustellen, wobei der Abstand bei größerer zu übertragender Leistung vergrößert wird und bei kleinerer Leistung verringert wird.

Es wird ein Gleichspannungswandler bereitgestellt, der in Abhängigkeit einer Vorgabe die Leistung durch den Gleichspannungswandler anpasst, indem das Verhältnis der Einschaltdauer des dritten zum zweiten Schalter verändert wird. Vorteilhaft wird ein Gleichspannnugswandler bereitgestellt, dessen Leistung vorgebbar ist.

Anders formuliert wird wird eine Schaltung für einen Gleichspannungswandler, insbesondere mit der Topologie eines aktiv geklemmten Sperrwandlers, mit einer Regeleinrichtung bereitgestellt, die ein Modulationsverfahren für die Steuerung der Schalter implementiert, welches es ermöglicht einen elektrischen Leistungsfluss von der Sekundärseite zur Primärseite zu realisieren, ohne dabei insbesondere Mehraufwände in der Schaltung in Bezug auf weitere elektronische Komponenten zu generieren.

Der erfindungsgemäße Gleichspannungswandler zur elektrischen Leistungsübertragung von einer Sekundärseite zu einer Primärseite des Gleichspannungswandlers weist auf der Primärseite insbesondere eine aktiv geklemmte Sperrwandlerschaltung auf. Diese Schaltung schaltet den Strom im Primärkreis mit einem gesteuerten ersten Schalter . Diese Schaltung kann mit unterschiedlichen Topologien aber äquivalenter Funktionalität ausgeführt sein.

Ein gesteuerter zweiter Schalter im Primärkreis bewirkt insbesondere zusammen mit einem Kondensator die aktive Klemmung und begrenzt eine Spannung auf der Primärseite, um unter anderem die Belastung des ersten Schalters zu reduzieren. Die Primärseite des Gleichspannungswandlers ist induktiv mit der Sekundärseite gekoppelt. Dadurch wird eine elektrische induktive und galvanisch getrennte Leistungsübertragung zwischen der Primärseite und der Sekundärseite in beide Richtungen ermöglicht.

Die Sekundärseite ist mit der Primärseite über eine Sekundärspule induktiv gekoppelt. Der Strom durch diese Sekundärspule wird mittels einem, insbesondere eines einzigen, gesteuerten sekundärseitigen dritten Schalters geschaltet. Dabei weist der Gleichspannungswandler eine Regeleinrichtung, insbesondere eine Regelschaltung, auf. Bei der induktiven Kopplung kann die Kopplung so ausgeführt sein, dass die Spannung an der einen gekoppelten Primärspule der Primärseite entgegengesetzt zu der Spannung der anderen gekoppelten Sekundärspule ist. Dazu können insbesondere die Wicklungen der Spulen, die die Induktivitäten bilden, einen unterschiedlichen Wickelsinn aufweisen.

Dabei definiert sich die Primärseite als die Seite des Gleichspannungswandlers, die eine gesteuerte Halbbrücke mit dem ersten Schalter und dem zweiten Schalter aufweist, wobei diese beiden gesteuerten Schalter insbesondere alternierend so angesteuert werden können, dass sie im Betrieb niemals gleichzeitig leitend geschaltet sind.

Mit einem solchen Gleichspannungswandler kann, insbesondere ohne zusätzliche elektronische Komponenten, ein Leistungsfluss von der Sekundärseite zur Primärseite erfolgen.

Im Vergleich mit einem aktiv geklemmten Sperrwandler, der den Leistungsfluss von der Primärseite zur Sekundärseite steuert, wird für den umgekehrten Leistungsfluss der erste Schalter der Primärseite erst dann nicht leitend geschaltet, also ausgeschaltet, wenn der gesteuerte dritte Schalter der Sekundärseite leitend geschaltet ist, also eingeschaltet ist, womit ein elektrischer Leistungsfluss von der Sekundär- zur Primärseite erreicht wird.

Die elektrische Leistung wird somit von der Sekundärseite auf die Primärseite induktiv übertragen. Diese Energie wird erst im Kondensator und dann in der Primärspule der Primärseite gespeichert, bevor die Abgabe der Energie an eine Last der Primärseite erfolgt.

Mit dem hier dargestellten Modulationsverfahren, d. h. der Abfolge der Steuersignale der Regeleinrichtung für die drei Schalter, werden der erste Schalter und der zweite Schalter im so genannten "zero voltage switching" (ZVS) betrieben, d. h. es wird nur aktiv nicht leitend, aber nicht aktiv leitend geschaltet.

Der Ausschaltvorgang des dritten Schalters, d. h. das nicht leitend Schalten, erfolgt mittels dem "reverse recovery" bzw. mittels der Sperrzeitverzögerung der rückwärtsleitenden Diode des dritten Schalters. Diese Betriebsweise wird auch als "zero current switching" (ZCS) bezeichnet. Der dritte Schalter wird auch mittels ZCS eingeschaltet.

Durch diese Topologie wird die Belastung des ersten Schalters beim nicht leitend schalten reduziert, da ein Strom der Primärspule auf den Schaltungsteil mit dem zweiten Schalter und dem Begrenzungskondensator kommutiert.

Die Primärseite dieses Gleichspannungswandlers kann ein Paar von Anschlüssen aufweisen, das so mit der Sperrwandlerschaltung verbunden ist, dass im Betrieb des Gleichspannungswandlers, mit einem Leistungsfluss von der Sekundärseite zur Primärseite, an diesen Anschlüssen eine elektrische Leistung bereitgestellt werden kann.

Die Sekundärseite dieses Gleichspannungswandlers kann ein Paar von Sekundärspannungsanschlüssen aufweisen, das so mit der Sekundärspule und dem dritten Schalter verbunden ist, dass im Betrieb des Gleichspannungswandlers, mit einem Leistungsfluss von der Sekundärseite zur Primärseite, an diesen Sekundärspannungsanschlüssen eine elektrische Leistung aufgenommen werden kann.

Dazu kann das Paar von sekundärseitigen Anschlüssen mit einer dritten Reihenschaltung aus dem dritten Schalter und der Sekundärspule elektrisch verbunden sein.

Gemäß einer Ausgestaltung der Erfindung wird vorgeschlagen, dass die erste Reihenschaltung parallel zu einem ersten Zwischenkreiskondensator geschaltet ist. Dies führt zu einer konstant gehaltenen Spannung am Primärseitenanschluss des Gleichspannungswandlers. Alternativ kann der erste Zwischenkreiskondensator auch ein Teil einer anderen Schaltung sein, mit der der erfindungsgemäße Gleichspannungswandler elektrisch verbunden ist und somit nicht Teil des Gleichspannungswandlers sein.

Gemäß einer weiteren Ausgestaltung der Erfindung wird vorgeschlagen, dass die dritte Reihenschaltung parallel zu einem zweiten Zwischenkreiskondensator geschaltet ist, wodurch die Spannung am Sekundärseitenanschluss des Gleichspannungswandlers geglättet wird. Alternativ kann der zweite Zwischenkreiskondensator auch ein Teil einer anderen Schaltung sein, mit der der erfindungsgemäße Gleichspannungswandler elektrisch verbunden ist.

Gemäß einer die Erfindung verbessernden Maßnahme wird vorgeschlagen, dass mindestens einer der drei Schalter des Gleichspannungswandlers auf Basis der Siliziumtechnologie, der Siliziumcarbid-Technologie oder der Galliumnitrid-Technologie gefertigt sind. Gegenüber z. B. eines MOSFET auf Basis der Silizium Technologie als elektronischer Schalter kann durch Verwendung von Komponenten basierend auf anderen Fertigungstechnologien ein höherer Wirkungsgrad des Gleichspannungswandlers erreicht werden, da geringere Verluste auftreten.

Gemäß einer die Erfindung verbessernden Maßnahme wird vorgeschlagen, dass einzelne oder alle drei Schalter des Gleichspannungswandlers als HEMT (highelectron-mobility transistor) ( dt. »Transistor mit hoher Elektronenbeweglichkeit«, jFET ( engl. junction-fet, bzw. non-insulated-gate-fet, NIGFET) (Sperrschicht-Feldeffekttransistor), Leistungs- MOSFET, IGBT (insulated-gate bipolar transistor) (dt. Bipolartransistor mit isolierter Gate-Elektrode), oder Thyristoren ausgeführt werden. Weiterhin können Kaskoden, also Reihenschaltungen von normally-on Bauelementen und Niederspannungshalbleitern, oder auch High Electron Mobility Transistoren (HEMT) zur Steuerung des Stromflusses eingesetzt werden.

Außerdem können andere unipolare Bauelemente zur Steuerung des Stromflusses eingesetzt werden. Mit einem unipolaren Bauelement wird der Vorteil der geringeren Durchlassspannung, wie beim MOSFET-Transistor, erreicht.

Ferner betrifft die Erfindungein Verfahren zur Steuerung eines Gleichspannungswandlers, um elektrische Leistung von einer Sekundärseite zu einer Primärseite des Gleichspannungswandlers zu übertragen. Der Gleichspannungswandler umfasst hierbei einen Transformator mit einer primärseitigen Primärspule und einer sekundärseitigen Sekundärspule. Die Primärspule ist einerseits mit einem ersten Primärspannungsanschluss verbunden und andererseits in Reihe mit einem ersten Schalter mit einem zweiten Primärspannungsanschluss verbunden. Parallel zur Primärspule ist ein Kondensator in Reihe mit einem zweiten Schalter verbunden oder geschaltet. Die Sekundärspule ist einerseits mit einem ersten Sekundärspannungsanschluss und andererseits in Reihe mit einem dritten Schalter mit einem zweiten Sekundärspannungsanschluss verbunden. Der Gleichspannungswandler umfasst weiter eine Regeleinrichtung zur Steuerung oder Durchführung der Schritte:
Wiederholtes Ausschalten und Einschalten des ersten, zweiten und dritten Schalters, wobei der erste Schalter stets ausgeschaltet ist, wenn der zweite Schalter eingeschaltet ist und umgekehrt zur Generierung eines Wechselstroms in der Primärspule. Ausschalten und Einschalten des dritten Schalter in Abhängigkeit der Schalterstellung des ersten Schalters. Weiter steuert die Regeleinrichtung weitere Schritte: Vorgeben eines Zeitpunktes des Einschalten des dritten Schalters als ein Zeitpunkt bevor der erste Schalter ausgeschaltet und der zweite Schalter eingeschaltet wird, um einen Leistungsfluss seitens der Sekundärseite zu der Primärseite zu ermöglichen.

Vorteilhaft wird ein Verfahren zur Ansteuerung eines Gleichspannungswandlers bereitgestellt, welches eine elektrische Leistungsübertragung von der Sekundärseite zur Primärseite des Gleichspannungswandlers ermöglicht.

In einer anderen Ausgestaltung der Erfindung steuert die Regeleinrichtung auch weitere Schritte:
Vorgeben eines Zeitpunktes des Einschalten des dritten Schalters als ein Zeitpunkt nachdem der erste Schalter ausgeschaltet und der zweite Schalter eingeschaltet wird, um einen Leistungsfluss seitens der Primärseite zu der Sekundärseite zu ermöglichen.

Vorteilhaft wird ein Verfahren zur Ansteuerung eines Gleichspannungswandlers bereitgestellt, welches auch eine elektrische Leistungsübertragung von der Primärseite zur Sekundärseite des Gleichspannungswandlers ermöglicht.

Erfindungsgemäß steuert die Regeleinrichtung auch weitere Schritte:
Bestimmen einer vorgebbaren Leistungsübertragungsrichtung;
Vorgeben eines Zeitpunktes des Einschaltens des dritten Schalters als ein Zeitpunkt vor oder nachdem der erste Schalter ausgeschaltet und der zweite Schalter eingeschaltet wird in Abhängigkeit der bestimmten Leistungsübertragungsrichtung.

Es wird ein Verfahren zur Ansteuerung eines Gleichspannungswandlers bereitgestellt, welches in Abhängigkeit einer Vorgabe die Leistungsübertragungsrichtung durch den Gleichspannungswandler anpasst, indem der Zeitpunkt des Einschaltens des dritten Schalters in Abhängigkeit der Schalterstellung des ersten Schalters auf einen Zeitpunkt gelegt wird, der vor oder nach dem Zeitpunkt des Ausschaltens des ersten Schalters gelegt wird. Vorteilhaft wird ein Verfahren zur Ansteuerung eines Gleichspannnugswandlers bereitgestellt, bei dem eine einzustellende Leistungsübertragungsrichtung durch den Gleichspannungswandler vorgebbar ist.

Anders formuliert wird ein Verfahren zur Steuerung eines Gleichspannungswandlers angegeben, um elektrische Leistung von einer Sekundärseite zu einer Primärseite des Gleichspannungswandlers zu übertragen. Der Gleichspannungswandler weist insbesondere auf der Primärseite eine aktiv geklemmte Sperrwandlerschaltung mit einem gesteuerten ersten Schalter und einen gesteuerten zweiten Schalter auf.

Dabei wird die Primärseite des Gleichspannungswandlers induktiv, mittels einer primärseitigen Primärspule und einer sekundärseitigen Sekundärspule, mit der Sekundärseite gekoppelt. Der Strom durch die Sekundärspule wird bei diesem Gleichspannungswandler von einem, insbesondere einem einzigen, dritten Schalter geschaltet. Insbesondere werden der Der erste Schalter und der zweite Schalter werden zur Leistungsübertragung, insbesondere um eine erste Totzeit versetzt, alternierend leitend geschaltet, entsprechend eingeschaltet. Entsprechend diesem Verfahren werden insbesondere der dritte Schalter und der zweite Schalter, synchron um eine zweite Totzeit versetzt, nicht leitend geschaltet, entsprechend ausgeschaltet.

Mit diesem Verfahren kann der beschriebene Gleichspannungswandler eine elektrische Leistung von seiner Sekundärseite zu seiner Primärseite transportieren.

Dazu wird der erste Schalter der Primärseite erst dann ausgeschaltet, wenn der gesteuerte dritte Schalter der Sekundärseite eingeschaltet ist, wodurch sich ein elektrischer Leistungsfluss von der Sekundär- zur Primärseite ergibt.

Dieses Verfahren kann auch mit allen anderen oben beschriebenen Ausgestaltungen des Gleichspannungswandlers durchgeführt werden.

Ferner betrifft die Erfindung ein Computerprogrammprodukt, wobei dies Befehle umfasst, die bei der Ausführung des Programms durch einen Computer diesen veranlassen, das oben beschriebene Verfahren auszuführen.

Ferner betrifft die Erfindung ein computerlesbares Speichermedium, welches Befehle umfasst, die bei der Ausführung durch einen Computer diesen veranlassen, das oben beschriebene Verfahren auszuführen.

Ferner betrifft die Erfindung ein System mit einer ersten Gleichstromquelle, die eine erste Spannung aufweist, und eine zweite Gleichstromquelle, die eine zweite Spannung aufweist: Die erste Spannung ist höher als die zweite Spannung. Weiterhin weist das System einen Gleichspannungswandler auf wie er oben beschrieben ist. Die erste Gleichstromquelle der ersten Spannung ist mit der Primärseite des Gleichspannungswandlers elektrisch verbunden und die zweite Gleichstromquelle der zweiten Spannung ist mit der Sekundärseite des Gleichspannungswandlers verbunden.

### Ausführungsbeispiel

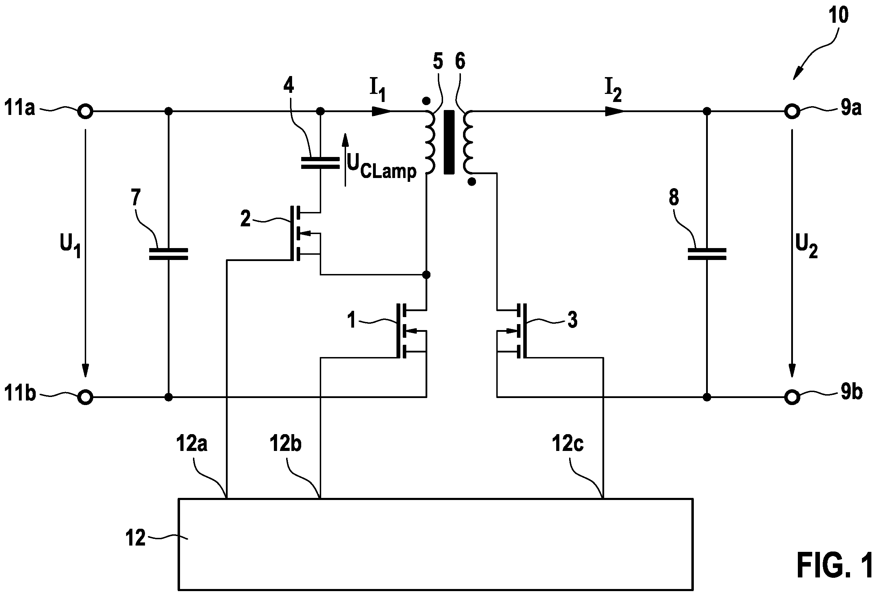

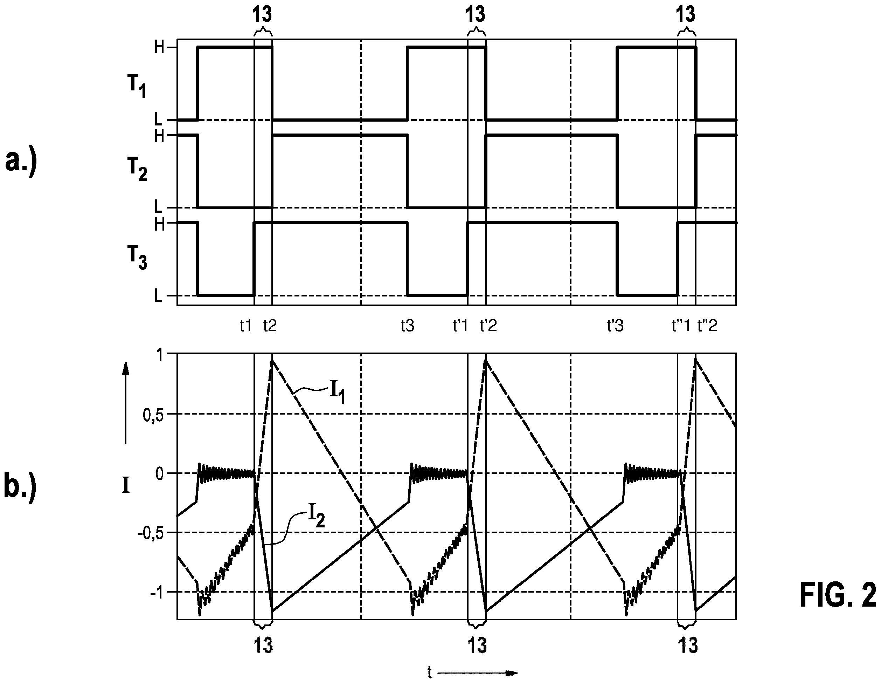

Ausführungsbeispiele der Erfindung sind in den Figuren 1 und 2 dargestellt und werden im Folgenden näher erläutert. Es zeigt:
- Figur 1:: die Topologie des Gleichspannungswandlers;
- Figur 2a:: die Ansteuersignale der drei Schalter; und
- Figur 2b:: die Stromverläufe der Primär- und Sekundärseite.

Die Figur 1 zeigt eine Topologie eines Gleichspannungswandlers 10, in der ein erster Schalter 1 mit einer Primärspule 5 einer Primärseite des Gleichspannungswandlers 10, in einer ersten Reihenschaltung, elektrisch verbunden ist. Ein zweiter Schalter 2 ist auf der Primärseite angeordnet und mit einem Kondensator 4 in einer zweiten Reihenschaltung elektrisch verbunden, wobei die zweite Reihenschaltung parallel zur primärseitigen Primärspule 5 geschaltet ist. Ein erster Kontakt der ersten Reihenschaltung auf der Seite der Primärspule 5 ist mit einem ersten Primärspannungsanschluss 11a der Primärseite des Gleichspannungswandlers 10 verbunden und ein zweiter Kontakt der ersten Reihenschaltung auf der Seite des ersten Schalters 1 ist mit einem zweiten Primärspannungsanschluss 11b der Primärseite des Gleichspannungswandlers 10 verbunden. Zwischen diesen Anschlüssen 11a und 11b der Primärseite liegt eine Spannung U1 an. Diese Topologie der Primärseite des Gleichspannungswandlers stellt ein Beispiel für eine aktiv geklemmte Sperrwandlerschaltung dar.

Ein erster Zwischenkreiskondensator 7 kann, wie oben dargestellt, mit dem ersten und dem zweiten Primärspannungsanschluss 11a, 11b der Primärseite elektrisch verbunden sein.

Die Sekundärseite des Gleichspannungswandlers 10 weist einen gesteuerten dritten Schalter 3 auf, der mit der Sekundärspule 6 der Sekundärseite eine dritte elektrische Reihenschaltung bildet. Ein erster Kontakt der dritten Reihenschaltung auf der Seite der Sekundärspule 6 bildet den ersten Sekundärspannungsanschluss 9a der Sekundärseite des Gleichspannungswandlers 10 und ein zweiter Kontakt der dritten Reihenschaltung auf der Seite des dritten Schalters 3 bildet den zweiten Sekundärspannungsanschluss 9b der Sekundärseite des Gleichspannungswandlers 10. Zwischen diesen Anschlüssen 9a und 9b der Sekundärseite liegt die Spannung U2 an.

Ein zweiter Zwischenkreiskondensator 8 kann, wie oben dargestellt, mit dem ersten und dem zweiten Sekundärspannungsanschluss 9a, 9b der Sekundärseite elektrisch verbunden sein.

Die Primärspule 5 der Primärseite und die Sekundärspule 6 der Sekundärseite sind induktiv miteinander gekoppelt. Insbesondere sind die Induktivitäten als galvanisch voneinander getrennte Wicklungen eines Transformators ausgebildet.

In der Figur 1 sind die gesteuerten Schalter 1, 2, 3 als n-Kanal MOSFET-Transistoren ausgeführt, es können aber auch andere unipolare Bauelemente zur Steuerung des Stromflusses eingesetzt werden. Mit einem unipolaren Bauelement wird der Vorteil der geringeren Durchlassspannung, wie beim MOSFET-Transistor, erreicht. Beispiele dafür sind schon weiter oben in der Beschreibung genannt worden.

Eine Regeleinrichtung 12 ist mit ihren Ausgängen 12a, 12b und 12c jeweils mit den Steuerkontakten des zweiten Schalters 2, des ersten Schalters 1 und des dritten Schalters 3 verbunden. Die Regeleinrichtung 12 ist dazu eingerichtet, die einzelnen Schalter 1, 2 und 3 beispielsweise entsprechend dem in Figur 2a gezeigten Ansteuermusters anzusteuern. Die Regeleinrichtung 12 steuert die Steuerkontakte der drei Schalter 1, 2 und 3 entsprechend dem Verlauf in Figur 2a auf High oder Low. Wenn das Steuersignal High ist, wird der jeweilige Schalter leitend geschaltet, entsprechend eingeschaltet, wenn das Steuersignal Low ist, wird der jeweilige Schalter nicht leitend geschaltet, enstprechend ausgeschaltet.

Bei einer derartigen zeitlichen Abfolge der Ansteuerung der Schalter wird elektrische Leistung induktiv über den Transformator aus Sekundärspule 6 und der Primärspule 5 von der Sekundärseite des Gleichspannungswandlers auf die Primärseite übertragen. Diese Energie wird erst im Kondensator 4 und dann in der Primärspule 5 gespeichert, bevor diese Energie an eine an die Primärspannungsanschlüsse 11a, 11b angeschlossene Last abgegeben wird.

Die Figur 2b gibt die aus dem beschriebenen Ansteuermuster resultierenden Stromverläufe I1 in der Primärspule 5 und I2 in der Sekundärspule 6 des Gleichspannungswandlers an, wobei die mit I1 und I2 gekennzeichneten Pfeile in der Figur 2a im Primärkreis bzw. im Sekundärkreis des Gleichspannungswandlers 10 die Stromrichtungen an diesen Punkten der Topologie angeben.

Im Folgenden werden die aus dem Ansteuermuster aus Figur 2a resultierenden Stromverläufe von Figur 2b beginnend kurz bevor der dritte Schalter 3 der Sekundärseite zum Zeitpunkt t1 leitend geschaltet wird, beschrieben.

Die primärseitige Primärspule 5 und die sekundärseitige Sekundärspule 6, die induktiv gekoppelt sind, können in einer für die folgende Beschreibung verwendeten elektrischen Ersatzdarstellung als äquivalent betrachtet werden. Eine äquivalente Darstellung umfasst einen idealen Überträger zwischen der Sekundär- und der Primärseite des Gleichspannungswandlers und eine Streuinduktivität in Reihe mit einer Hauptinduktivität auf der Primärseite, wobei die Hauptinduktivität parallel dem idealen Überträger geschaltet ist.

Zu Beginn der Betrachtung, vor dem Zeitpunkt t1, leitet der erste Schalter 1. Sowohl der zweite Schalter 2 als auch der dritte Schalter 3 sind nicht leitend.

Zunächst fließt ein, durch die Hauptinduktivität des Transformators getriebener, abklingender negativer Strom I1, wodurch elektrische Leistung an die Primärseite übertragen wird.

Wird jetzt beim Zeitpunkt t1 der dritte Schalter 3 leitend geschaltet, so erfolgt das im ZCS-Mode, da der Strom I2 sehr klein ist. Mit leitendem dritten Schalter 3 liegt die Summe der beiden Spannungen U1 und mittels des Transformators übersetzten Spannung U2 an der Streuinduktivität an. Da die Streuinduktivität klein gegen die Hauptinduktivität ist, steigt der Strom I2 in negative Richtung steil an und es wird Leistung aus einer an den Sekundärspannungsanschlüssen angeschlossenen zweiten Gleichspannungsquelle entnommen.

Die mittels des Transformators übersetzten Spannung U2 bedingt, resultierend aus einem unterschiedlichen Wickelsinn der Wicklungen des Transformators, einen Anstieg eines Stromes durch die Hauptinduktivität, der in der Folge auch das Vorzeichen von I1 ändert. Die Dauer des überlappenden Zeitraums 13, also zwischen den Zeitpunkten t1 und t2, in dem der erste Schalter 1 und der dritte Schalter 3 gemeinsam leitend geschaltet sind, kann zur Regelung der Leistungsübertragung eingesetzt werden.

Am Ende dieses Zeitraums, in dem der erste Schalter 1 und der dritte Schalter 3 gemeinsam leitend geschaltet sind, wird der erste Schalter 1, zum Zeitpunt t2, verlustarm ausgeschaltet. Durch das Ausschalten des ersten Schalters 1 kommutiert der primärseitige Strom I1, bedingt durch die intrinsische Diode, auf den rückwärtsleitenden zweiten Schalter 2, so dass der zweite Schalter S2 quasi verlustfrei, im ZVS-Mode, eingeschaltet wird.

In dieser Phase liegt eine kleine negative Spannung über der Streuinduktivität an, die durch die Differenz aus einer Spannung U_{Clamp} am Kondensator 4 und der mittels des Transformators übersetzten Spannung U2 gebildet wird. Daher nimmt der negative Strom I2 ab.

Über der Hauptinduktivität liegt nahezu die volle mittels des Transformators übersetzte Spannung U2 an und der Strom I1 fällt entsprechend. Somit wird die Energie im kondensator 4 und in der Hauptinduktivität gespeichert.

Der Strom I1 durch den zweiten Schalter 2 hat seine Richtung gewechselt, wenn diese Phase endet. Das Abschalten vom zweiten Schalter 2 erfolgt zum Zeitpunkt t3 somit mit niedrigen Verlusten. Daraufhin kommutiert der Strom durch die Hauptinduktivität auf die Rückwärtsdiode des ersten Schalters 1, so dass der erste Schalter 1, nahezu verlustfrei im ZVS-Mode zum Zeitpunkt t3, eingeschaltet wird.

Der Strom I2 durch den dritten Schalter 3ist auf niedrige Werte gesunken und kann daher verlustarm, nahezu im ZCS-Mode, insbesondere mit einem Zeitabstand zum Abschaltsignal von Schalter 2 versetzt, synchron mit mit dem zweiten Schalter 2 zum Zeitpunkt t3 abgeschaltet werden. Alternativ schaltet der dritte Schalter 3 auch durch reverse-recovery der Rückwärtsleitenden Diode passiv ab.

Der negative Strom I1 in der Hauptinduktivität fließt nun an die primärseitig an den Primärspannungsanschlüssen 11a und 11b angeschlossene Last. In dieser Phase findet also die Abgabe der in der vorherigen Phase aufgenommenen Leistung aus der sekundärseitig angeschlossenen zweiten Gleischspannungsquelle an eine primärseitig angeschlossene erste Gleichspannungsquelle oder Last statt. Mit dem Einschalten des dritten Schalters 3 bei t'1, im ZCS-Mode, bei kleinem Strom, beginnt der beschriebene Zyklus von vorne.

Zusammenassend wird elektrische Leistung von der Sekundärseite der Schaltung aufgenommen und an die Primärseite der Schaltung abgegeben. Vorteilhafterweise werden alle Schalter entweder, wie erster Schalter 1 und zweiter Schalter 2 im ZVS-Mode, oder im ZCS-Mode wie der dritte Schalter 3 betrieben. Die geringen Schaltverluste in diesen Arbeitspunkten ermöglichen auch in dem hier beschriebenen Ansteuermuster oder Modulationsverfahren, bzw. bei diesem Steuerzyklus, eine hohe Schaltfrequenz. Somit entstehen keine zusätzlichen Hardwareaufwände in der Schaltung im Vergleich zum Betrieb des Gleichspannungswandlers von der Primär- zur Sekundärseite.

## Patentansprüche

1. Gleichspannungswandler (10)
mit einem Transformator mit einer primärseitigen Primärspule (5) und einer sekundärseitigen Sekundärspule (6),
wobei die Primärspule (5) einerseits mit einem ersten Primärspannungsanschluss( 11a) verbunden ist und andererseits in Reihe mit einem ersten Schalter (1) mit einem zweiten Primärspannungsanschluss (11b) verbunden ist,
wobei parallel zur Primärspule (5) ein Kondensator (4) in Reihe mit einem zweiten Schalter (2) verbunden ist,
wobei die Sekundärspule (6) einerseits mit einem ersten Sekundärspannungsanschluss (9a) und andererseits in Reihe mit einem dritten Schalter (3) mit einem zweiten Sekundärspannungsanschluss (9b) verbunden ist mit einer Regeleinrichtung (12) die dazu eingerichtet ist,
den ersten (1), zweiten (2) und dritten Schalter (3) wiederholend abzuschalten und einzuschalten,
wobei der erste Schalter (1) stets ausgeschaltet ist, wenn der zweite Schalter (2) eingeschaltet ist und umgekehrt zur Generierung eines Wechselstroms in der Primärspule (5) und
den dritten Schalter (3) in Abhängigkeit der Schalterstellung des ersten Schalters (1) auszuschalten und einzuschalten,
**dadurch gekennzeichnet, dass**
die Regeleinrichtung (12) dazu eingerichtet ist,
einen Zeitpunkt des Einschaltens des dritten Schalters (3) auf einen Zeitpunkt zu legen, bevor der erste Schalter (1) ausgeschaltet und der zweite Schalter (2) eingeschaltet wird um einen Leistungsfluss seitens der Sekundärseite zu der Primärseite zu ermöglichen,
den Abstand des Zeitpunkts des Einschaltens des dritten Schalters (3) vor dem Zeitpunkt des Ausschaltens des ersten Schalters (1) in Abhängigkeit einer vorgebbaren Leistung einzustellen, wobei der Abstand bei größerer zu übertragender Leistung vergrößert wird und bei kleinerer Leistung verringert wird, und den dritten Schalter (3) in seinem Stromnulldurchgang oder kurz vor seinem Stromnulldurchgang auszuschalten, wobei durch das Einschalten des dritten Schalters (3) ein Strom (I2) in der Sekundärspule (6) ansteigt und durch das Ausschalten des ersten Schalters (1) der Strom (I2) in der Sekundärspule (6) abnimmt.

2. Gleichspannungswandler (10) gemäß Anspruch 1, **dadurch gekennzeichnet, dass** die Regeleinrichtung (12) dazu eingerichtet ist den Zeitpunkt des Einschaltens des dritten Schalters (3) auf einen Zeitpunkt zu legen, nachdem der erste Schalter (1) ausgeschaltet und der zweite Schalter (2) eingeschaltet wird um einen Leistungsfluss seitens der Primärseite zu der Sekundärseite zu ermöglichen.

3. Gleichspannungswandler (10) gemäß Anspruch 2, **dadurch gekennzeichnet, dass** die Regeleinrichtung (12) dazu eingerichtet ist in Abhängigkeit einer vorgebbaren Leistungsübertragungsrichtung den Zeitpunkt des Einschaltens des dritten Schalter (3) auf einen Zeitpunkt zu legen, bevor oder nachdem der erste Schalter (1) ausgeschaltet und der zweite Schalter (2) eingeschaltet wird um einen Leistungsfluss entsprechend der vorgegebenen Leisungsübertragungsrichtung einzustellen

4. Gleichspannungswandler (10) gemäß einem der vorhergehenden Ansprüche, **dadurch gekennzeichnet, dass** mindestens einer des ersten (1), des zweiten (2) oder des dritten (3) Schalters auf Basis der Siliziumtechnologie, der Siliziumcarbid-Technologie oder der Galliumnitrid-Technologie gefertigt sind.

5. Verfahren zur Steuerung eines Gleichspannungswandlers (10),
wobei der Gleichspannungswandler (10)
einen Transformator mit einer primärseitigen Primärspule (5) und einer sekundärseitigen Sekundärspule (6) aufweist,
wobei die Primärspule (5) einerseits mit einem ersten Primärspannungsanschluss (11a) verbunden ist und andererseits in Reihe mit einem ersten Schalter (1) mit einem zweiten Primärspannungsanschluss (11b) verbunden ist,
wobei parallel zur Primärspule (5) ein Kondensator (4) in Reihe mit einem zweiten Schalter (2) verbunden ist,
wobei die Sekundärspule (6) einerseits mit einem ersten Sekundärspannungsanschluss (9a) und andererseits in Reihe mit einem dritten Schalter (3) mit einem zweiten Sekundärspannungsanschluss (9b) verbunden ist und eine Regeleinrichtung (12) aufweist zur Steuerung der Schritte:
wiederholtes Ausschalten und Einschalten des ersten (1), zweiten (2) und dritten Schalters (3),
wobei der erste Schalter (1) stets ausgeschaltet ist, wenn der zweite Schalter (2) eingeschaltet ist und umgekehrt zur Generierung eines Wechselstroms in der Primärspule (5),
Ausschalten und Einschalten des dritten Schalters (3) in Abhängigkeit der Schalterstellung des ersten Schalters (1)
**dadurch gekennzeichnet, dass**
die Regeleinrichtung (12) weitere Schritte steuert:
Vorgeben eines Zeitpunktes des Einschaltens des dritten Schalters (3) als ein Zeitpunkt bevor der erste Schalter (1) ausgeschaltet und der zweite Schalter (2) eingeschaltet wird, um einen Leistungsfluss seitens der Sekundärseite zu der Primärseite zu ermöglichen,
Einstellen des Abstands des Zeitpunkts des Einschaltens des dritten Schalters (3) vor dem Zeitpunkt des Ausschaltens des ersten Schalters (1) in Abhängigkeit einer vorgebbaren zu übertragenden Leistung, wobei der Abstand bei größerer zu übertragender Leistung vergrößert wird und bei kleinerer zu übertragender Leistung verringert wird,
Ausschalten des dritten Schalter (3) in seinem Stromnulldurchgang oder kurz vor seinem Stromnulldurchgang, wobei durch das Einschalten des dritten Schalters (3) ein Strom (I2) in der Sekundärspule (6) ansteigt und durch das Ausschalten des ersten Schalters (1) der Strom (I2) in der Sekundärspule (6) abnimmt.

6. Verfahren gemäß Anspruch 5 **dadurch gekennzeichnet, dass** die Regeleinrichtung weitere Schritte ausführt:
Vorgeben eines Zeitpunktes des Einschaltens des dritten Schalters (3) als ein Zeitpunkt nachdem der erste Schalter (1) ausgeschaltet und der zweite Schalter (2) eingeschaltet wird, um einen Leistungsfluss seitens der Primärseite zu der Sekundärseite zu ermöglichen.

7. Verfahren gemäß Anspruch 6 **dadurch gekennzeichnet, dass** die Regeleinrichtung folgende weitere Schritte ausführt:
Bestimmen einer vorgebbaren Leistungsübertragungsrichtung,
Vorgeben eines Zeitpunktes des Einschaltens des dritten Schalters (3) als ein Zeitpunkt vor oder nachdem der erste Schalter (1) ausgeschaltet und der zweite Schalter (2) eingeschaltet wird in Abhängigkeit der bestimmten Leistungsübertragungsrichtung.

8. Computerprogrammprodukt, umfassend Befehle, die bei der Ausführung des Programms durch einen Computer diesen veranlassen, das Verfahren nach einem der Ansprüche 5 bis 7 zur Steuerung eines Gleichspannungswandlers nach einem der Ansprüche1 bis 4 auszuführen.

9. Computerlesbares Speichermedium, umfassend Befehle, die bei der Ausführung durch einen Computer diesen veranlassen, das Verfahren nach einem der Ansprüche 5 bis 7 zur Steuerung eines Gleichspannungswandlers nach einem der Ansprüche 1 bis 4 auszuführen.

10. System aufweisend:
eine erste Gleichstromquelle mit einer ersten Spannung;
eine zweite Gleichstromquelle mit einer zweiten Spannung, wobei die erste Spannung höher ist als die zweite Spannung;
einen Gleichspannungswandler nach einem der Ansprüche 1 bis 4; wobei der Gleichspannungswandler (10) mit der ersten Gleichstromquelle primärseitig elektrisch verbunden ist und mit der zweiten Gleichstromquelle mit der zweiten Spannung sekundärseitig verbunden ist.

## Claims

1. DC-DC converter (10) having a transformer having a primary-side primary coil (5) and a secondary-side secondary coil (6),
wherein the primary coil (5) is connected on one side to a first primary voltage terminal (11a) and is connected on the other side, in series with a first switch (1), to a second primary voltage terminal (11b),
wherein, in parallel with the primary coil (5), a capacitor (4) is connected in series with a second switch (2),
wherein the secondary coil (6) is connected on one side to a first secondary voltage terminal (9a) and is connected on the other side, in series with a third switch (3), to a second secondary voltage terminal (9b), having a regulating device (12), which is designed
to switch the first (1), second (2) and third switches (3) off and on repeatedly,
wherein the first switch (1) is always switched off when the second switch (2) is switched on, and vice versa, for generating an alternating current in the primary coil (5), and
to switch the third switch (3) off and on depending on the switch position of the first switch (1),
**characterized in that**
the regulating device (12) is designed
to set a time at which the third switch (3) is switched on to a time before the first switch (1) is switched off and the second switch (2) is switched on in order to enable a power flow on the side of the secondary side to the primary side,
to set, depending on a presettable power, the interval of the time at which the third switch (3) is switched on before the time at which the first switch (1) is switched off, wherein the interval is increased as the power to be transmitted increases and is reduced as the power decreases, and to switch the third switch (3) off at its current zero crossing or shortly before its current zero crossing, wherein switching the third switch (3) on increases a current (12) in the secondary coil (6) and switching the first switch (1) off decreases the current (12) in the secondary coil (6).

2. DC-DC converter (10) according to Claim 1, **characterized in that** the regulating device (12) is designed to set the time at which the third switch (3) is switched on to a time after the first switch (1) is switched off and the second switch (2) is switched on in order to enable a power flow on the side of the primary side to the secondary side.

3. DC-DC converter (10) according to Claim 2, **characterized in that** the regulating device (12) is designed to set, depending on a presettable power transmission direction, the time at which the third switch (3) is switched on to a time before or after the first switch (1) is switched off and the second switch (2) is switched on in order to set a power flow corresponding to the preset power transmission direction.

4. DC-DC converter (10) according to one of the preceding claims, **characterized in that** at least one of the first (1), the second (2) or the third (3) switch is manufactured on the basis of silicon technology, silicon carbide technology or gallium nitride technology.

5. Method for controlling a DC-DC converter (10), wherein the DC-DC converter (10)
has a transformer having a primary-side primary coil (5) and a secondary-side secondary coil (6),
wherein the primary coil (5) is connected on one side to a first primary voltage terminal (11a) and is connected on the other side, in series with a first switch (1), to a second primary voltage terminal (11b),
wherein, in parallel with the primary coil (5), a capacitor (4) is connected in series with a second switch (2),
wherein the secondary coil (6) is connected on one side to a first secondary voltage terminal (9a) and is connected on the other side, in series with a third switch (3), to a second secondary voltage terminal (9b), and has a regulating device (12) for controlling the following steps:
repeated switching-off and switching-on of the first (1), second (2) and third switches (3),
wherein the first switch (1) is always switched off when the second switch (2) is switched on, and vice versa, for generating an alternating current in the primary coil (5),
switching-off and switching-on of the third switch (3) depending on the switch position of the first switch (1), **characterized in that**
the regulating device (12) controls further steps:
presetting of a time at which the third switch (3) is switched on as a time before the first switch (1) is switched off and the second switch (2) is switched on in order to enable a power flow on the side of the secondary side to the primary side,
setting, depending on a presettable power to be transmitted, of the interval of the time at which the third switch (3) is switched on before the time at which the first switch (1) is switched off, wherein the interval is increased as the power to be transmitted increases and is reduced as the power to be transmitted decreases,
switching-off of the third switch (3) at its current zero crossing or shortly before its current zero crossing, wherein switching the third switch (3) on increases a current (12) in the secondary coil (6) and switching the first switch (1) off decreases the current (12) in the secondary coil (6).

6. Method according to Claim 5, **characterized in that** the regulating device implements further steps:
presetting of a time at which the third switch (3) is switched on as a time after the first switch (1) is switched off and the second switch (2) is switched on in order to enable a power flow on the side of the primary side to the secondary side.

7. Method according to Claim 6, **characterized in that** the regulating device implements the following further steps:
determination of a presettable power transmission direction,
presetting of a time at which the third switch (3) is switched on as a time before or after the first switch (1) is switched off and the second switch (2) is switched on depending on the determined power transmission direction.

8. Computer program product, comprising commands which, when the program is run on a computer, instruct said computer to implement the method according to one of Claims 5 to 7 for controlling a DC-DC converter according to one of Claims 1 to 4.

9. Computer-readable storage medium, comprising commands which, when run on a computer, instruct said computer to implement the method according to one of Claims 5 to 7 for controlling a DC-DC converter according to one of Claims 1 to 4.

10. System having:
a first DC source having a first voltage;
a second DC source having a second voltage, wherein the first voltage is higher than the second voltage;
a DC-DC converter according to one of Claims 1 to 4, wherein the DC-DC converter (10) is electrically connected on the primary side to the first DC source and is connected on the secondary side to the second DC source having the second voltage.

## Revendications

1. Convertisseur de tension continue (10) comportant un transformateur doté d'une bobine primaire (5) côté primaire et d'une bobine secondaire (6) côté secondaire, dans lequel la bobine primaire (5) est d'une part reliée à une première borne de tension primaire (11a) et d'autre part reliée en série avec un premier commutateur (1) à une deuxième borne de tension primaire (11b),
dans lequel, en parallèle avec la bobine primaire (5), un condensateur (4) est relié en série à un deuxième commutateur (2),
dans lequel la bobine secondaire (6) est reliée d'une part à une première borne de tension secondaire (9a) et d'autre part, en série avec un troisième commutateur (3), à une deuxième borne de tension secondaire (9b), par un système de régulation (12) qui est conçu pour
ouvrir et fermer de manière répétée les premier (1), deuxième (2) et troisième (3) commutateurs,
dans lequel le premier commutateur (1) est toujours ouvert lorsque le deuxième commutateur (2) est fermé et inversement, pour générer un courant alternatif dans la bobine primaire (5) et
ouvrir et fermer le troisième commutateur (3) en fonction de la position de commutation du premier commutateur (1)
**caractérisé en ce que**,
le système de régulation (12) est conçu pour
fixer un instant de fermeture du troisième commutateur (3) à un instant qui précède l'ouverture du premier commutateur (1) et la fermeture du deuxième commutateur (2) afin de permettre un flux de puissance du côté secondaire vers le côté primaire,
régler l'écart entre l'instant de fermeture du troisième commutateur (3) et l'instant d'ouverture du premier commutateur (1) en fonction d'une puissance prédéfinissable, dans lequel l'écart est augmenté lorsque la puissance à transmettre est plus élevée et diminué lorsque la puissance est plus faible, et fermer le troisième commutateur (3) lors de son passage par un courant nul ou juste avant son passage par le courant nul, dans lequel un courant (12) augmente dans la bobine secondaire (6) du fait de la fermeture du troisième commutateur (3) et le courant (12) diminue dans la bobine secondaire (6) du fait de la fermeture du premier commutateur (1).

2. Convertisseur de tension continue (10) selon la revendication 1, **caractérisé en ce que** le système de régulation (12) est conçu pour fixer l'instant de fermeture du troisième commutateur (3) à un instant qui suit l'ouverture du premier commutateur (1) et la fermeture du deuxième commutateur (2) afin de permettre un flux de puissance du côté primaire vers le côté secondaire.

3. Convertisseur de tension continue (10) selon la revendication 2, **caractérisé en ce que** le système de régulation (12) est conçu pour fixer, en fonction d'un sens de transmission de puissance prédéfinissable, l'instant de fermeture du troisième commutateur (3) à un instant qui précède ou qui suit l'ouverture du premier commutateur (1) et la fermeture du deuxième commutateur (2) afin d'établir un flux de puissance correspondant au sens de transmission de puissance prédéfini.

4. Convertisseur de tension continue (10) selon l'une quelconque des revendications précédentes, **caractérisé en ce qu'**au moins l'un du premier (1), du deuxième (2) ou du troisième (3) commutateur est fabriqué sur la base de la technologie du silicium, de la technologie du carbure de silicium ou de la technologie du nitrure de gallium.

5. Procédé pour commander un convertisseur de tension continue (10), dans lequel le convertisseur de tension continue (10)
comprend un transformateur doté d'une bobine primaire (5) côté primaire et d'une bobine secondaire (6) côté secondaire,
dans lequel la bobine primaire (5) est d'une part reliée à une première borne de tension primaire (11a) et d'autre part reliée en série avec un premier commutateur (1) à une deuxième borne de tension primaire (11b),
dans lequel, en parallèle avec la bobine primaire (5), un condensateur (4) est relié en série à un deuxième commutateur (2),
dans lequel la bobine secondaire (6) est reliée d'une part à une première borne de tension secondaire (9a) et d'autre part, en série avec un troisième commutateur (3), à une deuxième borne de tension secondaire (9b), et comprend un système de régulation (12) destiné à commander les étapes consistant à :
ouvrir et fermer de manière répétée les premier (1), deuxième (2) et troisième (3) commutateurs,
dans lequel le premier commutateur (1) est toujours ouvert lorsque le deuxième commutateur (2) est fermé et inversement, pour générer un courant alternatif dans la bobine primaire (5),
ouvrir et fermer le troisième commutateur (3) en fonction de la position de commutation du premier commutateur (1) **caractérisé en ce que**
le système de régulation (12) commande d'autres étapes consistant à :
prédéfinir un instant de fermeture du troisième commutateur (3) en tant qu'instant qui précède l'ouverture du premier commutateur (1) et la fermeture du deuxième commutateur (2), afin de permettre un flux de puissance du côté secondaire vers le côté primaire,
régler l'écart entre l'instant de fermeture du troisième commutateur (3) et l'instant d'ouverture du premier commutateur (1) en fonction d'une puissance à transmettre prédéfinissable, dans lequel l'écart est augmenté lorsque la puissance à transmettre est plus élevée et est diminué lorsque la puissance à transmettre est plus faible,
ouvrir le troisième commutateur (3) lors de son passage par un courant nul ou juste avant son passage par le courant nul, dans lequel un courant (12) augmente dans la bobine secondaire (6) du fait de l'ouverture du troisième commutateur (3) et le courant (12) diminue dans la bobine secondaire (6) du fait de l'ouverture du premier commutateur (1).

6. Procédé selon la revendication 5, **caractérisé en ce que** le système de régulation met en œuvre des étapes supplémentaires consistant à :
prédéfinir un instant de fermeture du troisième commutateur (3) en tant qu'instant qui suit l'ouverture du premier commutateur (1) et la fermeture du deuxième commutateur (2), afin de permettre un flux de puissance du côté secondaire vers le côté primaire,

7. Procédé selon la revendication 6, **caractérisé en ce que** le système de régulation met en œuvre des étapes supplémentaires consistant à :
déterminer un sens de transmission de puissance prédéfinissable,
prédéfinir un instant de fermeture du troisième commutateur (3) en tant qu'instant qui précède ou qui suit l'ouverture du premier commutateur (1) et la fermeture du deuxième commutateur (2) en fonction du sens de transmission de puissance déterminé

8. Produit de programme d'ordinateur comprenant des instructions qui, lorsque le programme est exécuté par un ordinateur, amènent ce dernier à mettre en œuvre le procédé selon l'une quelconque des revendications 5 à 7 pour commander un convertisseur de tension continue selon l'une quelconque des revendications 1 à 4.

9. Support de stockage lisible par ordinateur comprenant des instructions qui, lorsqu'elles sont exécutées par un ordinateur, amènent ce dernier à mettre en œuvre le procédé selon l'une quelconque des revendications 5 à 7 pour commander un convertisseur de tension continue selon l'une quelconque des revendications 1 à 4.

10. Système comprenant :
une première source de courant continu présentant une première tension ;
une deuxième source de courant continu présentant une deuxième tension, dans lequel la première tension est supérieure à la deuxième tension ;
un convertisseur de tension continue selon l'une quelconque des revendications 1 à 4 ; dans lequel le convertisseur de tension continue (10) est relié électriquement côté primaire à la première source de courant continu et est relié électriquement côté secondaire à la deuxième source de courant continu présentant la deuxième tension.
